# EUROPEAN PATENT SPECIFICATION

(11) **EP 3 863 153 B1**
(45) Date of publication and mention of the grant of the patent: **01.11.2023**
(21) Application number: 21155604.8
(22) Date of filing: 05.02.2021
(51) Int. Cl.: H02K 3/12, H02K 21/14, H02K 9/08

(54) **ROTARY ELECTRIC MACHINE WITH BAR STATOR WINDING**
ROTIERENDE ELEKTRISCHE MASCHINE MIT STABFÖRMIGER STATORWICKLUNG
MACHINE ÉLECTRIQUE ROTATIVE COMPORTANT UN ENROULEMENT DE STATOR EN FORME DE BARRE

(30) Priority: 05.02.2020 IT 202000002245
(43) Date of publication of application: 11.08.2021
(73) Proprietor: FERRARI S.p.A., 41100 Modena (IT)
(72) Inventor: FERRARA, Davide, 41100 MODENA (IT); POGGIO, Luca, 41100 MODENA (IT); FAVERZANI, Paolo, 41100 MODENA (IT)
(74) Representative: Studio Torta S.p.A.

(56) References cited:
- EP-A1- 1 768 230
- WO-A1-2019/188776
- US-A1- 2017 302 114
- US-A1- 2019 280 542

## Description

### CROSS-REFERENCE TO RELATED APPLICATIONS

This patent application claims priority from Italian patent application no. 102020000002245 filed on 05/02/2020.

### TECHNICAL FIELD

The invention relates to a rotary electric machine.

The invention finds advantageous application in a rotary electric machine for automotive powering, which is installed on board a vehicle and can be used as a motor (absorbing electrical energy and generating a mechanical torque) or as a generator (converting mechanical energy into electrical energy).

### PRIOR ART

A rotary electric machine for automotive powering comprises a shaft, which is mounted in a rotary manner so as to rotate around a central rotation axis, a rotor, which generally has permanent magnets and is fitted to the shaft so as to rotate with the shaft itself, and a stator with a tubular, cylindrical shape, which is arranged around the rotor so as to enclose, on the inside, the rotor itself.

For many years now, stator windings have been manufactured with rigid bars: the rigid bars, at first, are bent in a "U" shape and, then, they are axially inserted into the stator slots, thus forming an input side, where the cusps of the "U"-shaped bars are arranged, and an output side, where the legs (namely, the straight portions) of the "U"-shaped bars are arranged; once the bars are inserted in the stator slots, the legs, on the output side, are bent and, hence, the free ends of the legs are connected to one another through welding so as to build the electrical paths of the stator winding.

Patent applications WO2019188776A1, US2019280542A1 and US2017302114A1 describe a rotary electric machine, in which a stator magnetic core is longitudinally crossed by a plurality of stator slots housing corresponding rigid bars covered, on the outside, with an insulating coating; each stator slot has a rectangular cross section having a long side arranged radially and a short side arranged circumferentially, whereas each bar has a rectangular cross section having a long side parallel to the short side of the corresponding slot and a short side parallel to the long side of the corresponding slot.

### DESCRIPTION OF THE INVENTION

The object of the invention is to provide a rotary electric machine having a greater energy efficiency as well as greater specific performances (power and/or torque).

According to the invention, there is provided a rotary electric machine according to the appended claims.

The appended claims describe preferred embodiments of the invention.

### BRIEF DESCRIPTION OF THE DRAWINGS

The invention will now be described with reference to the accompanying drawings, showing a non-limiting embodiment thereof, wherein:
figure 1 is a schematic, longitudinal section view of a rotary electric machine according to the invention;
figure 2 is a perspective view of a stator of the rotary electric machine of figure 1;
figure 3 is a view, on a larger scale, of a detail of figure 2;
figure 4 is a cross section view of a stator slot of the stator of figure 2;
figure 5 is a cross section view of a bar of a stator winding of the stator of figure 2;
figure 6 is a perspective view of a rotor of the rotary electric machine of figure 1;
figure 7 is a perspective view of the rotor of figure 6 with some parts left out for greater clarity;
figure 8 is a cross section view of the rotor of figure 6;
figure 9 is a schematic, longitudinal section view of the rotary electric machine of figure 1, highlighting the paths of air flows during the operation; and
figure 10 is a schematic, longitudinal section view of a variant of the rotary electric machine of figure 1, highlighting the paths of air flows during the operation.

### PREFERRED EMBODIMENTS OF THE INVENTION

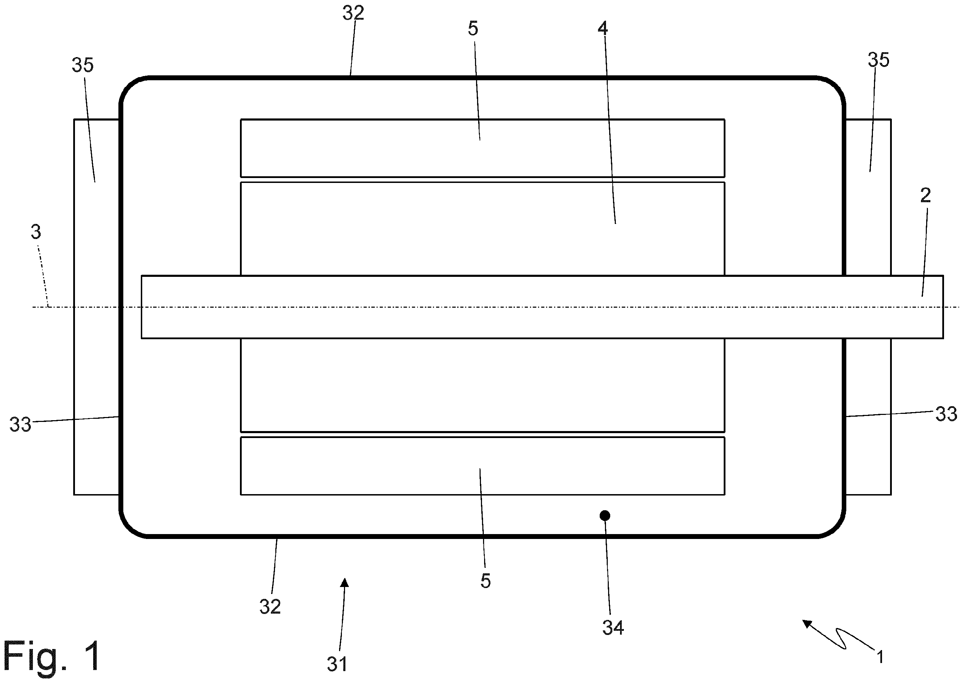

In figure 1, number 1 indicates, as a whole, a synchronous electric machine for automotive powering, said electric machine being a reversible electric machine (i.e. an electric machine which can work both as an electric motor, absorbing electrical energy and generating a mechanical torque, and as an electric generator, absorbing mechanical energy and generating electrical energy).

The electric machine 1 comprises a shaft 2, which is mounted in a rotary manner so as to rotate around a central rotation axis 3, a rotor 4 with permanent magnets, which is fitted to the shaft 2 so as to rotate with the shaft 2 itself, and a stator 5 with a tubular, cylindrical shape, which is arranged around the rotor 4 so as to enclose, on the inside, the rotor 4 itself.

Between the rotor 4 and the stator 5 there is defined an air gap with an annular shape, which has a small thickness (normally, the bare minimum needed to allow the rotor 4 to rotate inside the stator 5 in total safety).

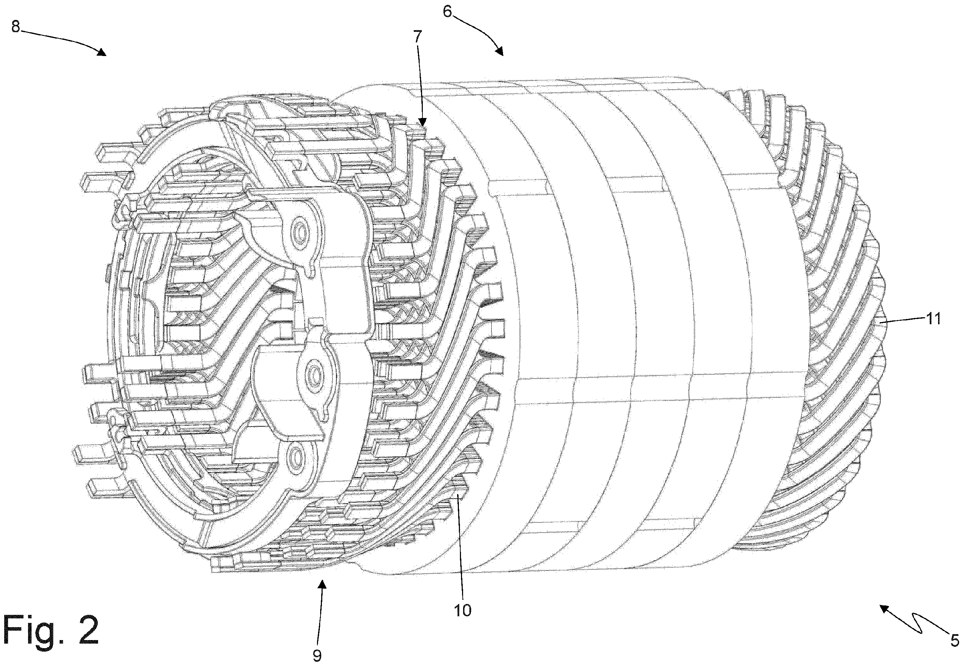

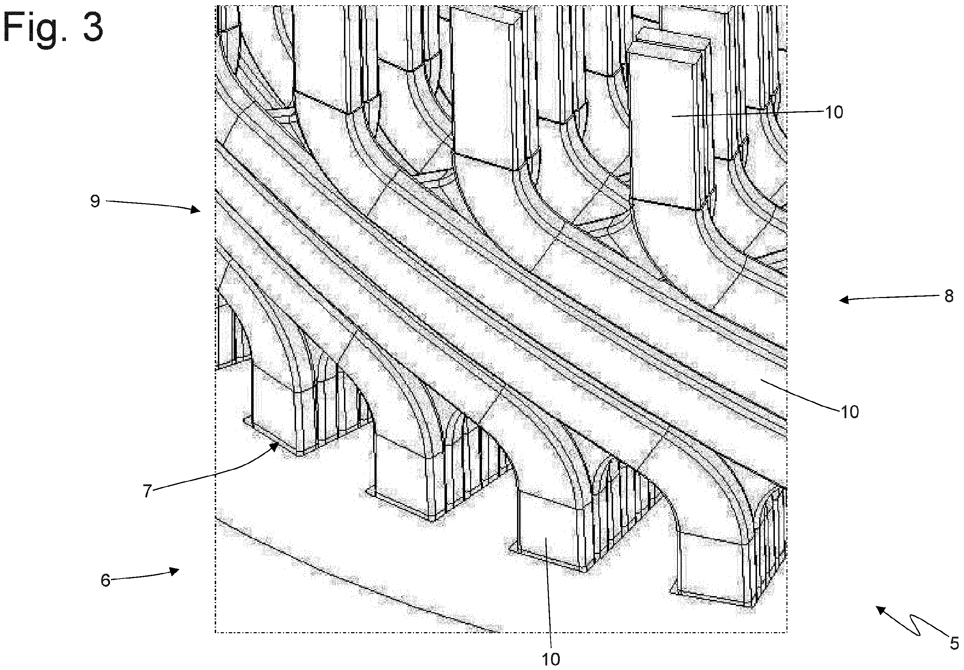

According to figures 2 and 3, the stator 5 comprises a magnetic core 6, which consists of a series of laminations (made of a ferromagnetic material) stacked together (like a pack) and has tubular shape with a central hole; the magnetic core 6 is longitudinally (axially) crossed by a plurality of stator slots 7, which are uniformly distributed along the inner side of the magnetic core 6 and house a three-phase stator winding 8.

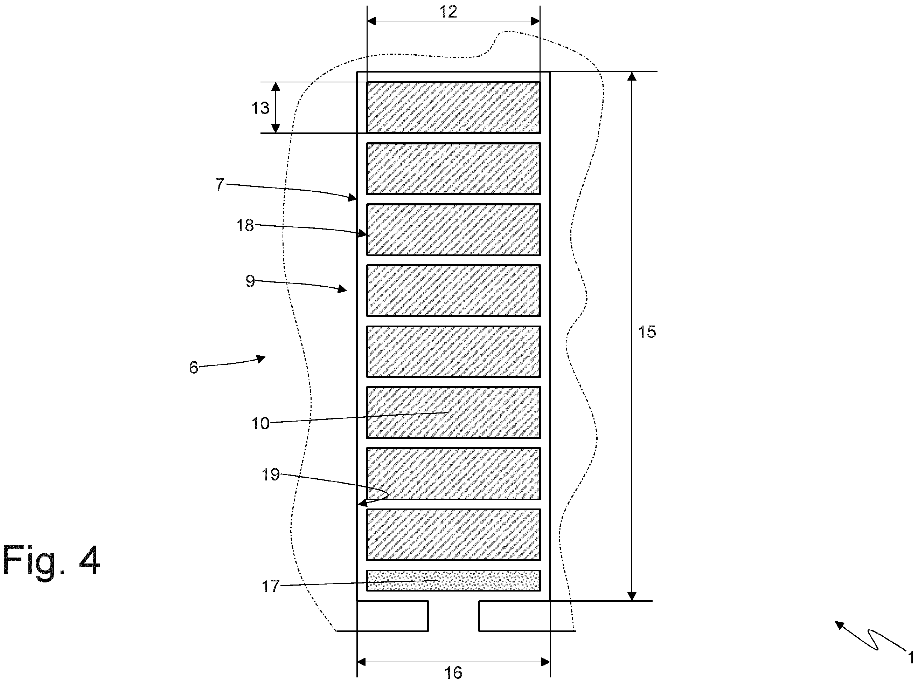

The three-phase stator winding 8 comprises a series of rigid bars 9 made of copper and shaped like a "U", each comprising two legs 10 connected to one another by a cusp 11; the two legs 10 of a same bar 9 constitute two corresponding conductors of the stator winding 8. The "U"-shaped bars 9 are inserted through the stator slots 7 defining an input side, where the cusps 11 of the "U"-shaped bars 9 are arranged, and an output side, where the legs 10 of the "U"-shaped bars 9 are arranged. In particular, according to figure 4, in each stator slot 7 there are eight legs 10 (i.e. eight conductors of the stator winding 8) belonging to eight corresponding "U"-shaped rigid bars 9. According to figure 2, the ends of the legs 10 of the "U"-shaped bars 9 are bent and then electrically connected (welded) to one another so as to form the electrical paths of the stator winding 8. As a consequence, considering one single stator slot 7, each bar 9 has a central straight portion, which is inserted in the corresponding stator slot 7, and two end portions, which are bent relative to the central portion.

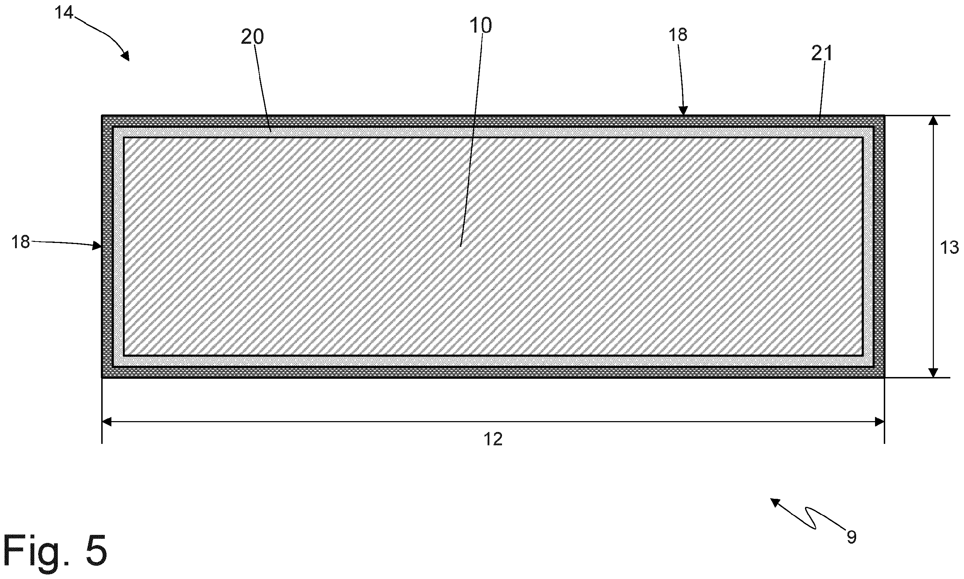

According to figure 5, each bar 9 has a rectangular cross section having a long side 12 and a short side 13 and is covered, on the outside, with an insulating coating 14.

According to figure 4, each stator slot 7 has a rectangular cross section having a long side 15 arranged radially and a short side 16 arranged circumferentially.

As mentioned above and according to figure 4, each stator slot 7 houses eight bars 9 lined up one behind the other; furthermore, each bar 9 has a rectangular cross section having the long side 12 parallel to the short side 16 of the corresponding stator slot 7 and the short side 13 parallel to the long side 15 of the corresponding stator slot 7. Furthermore, according to figure 5, in each bar 9, the ratio between the long side 12 and the short side 13 of the rectangular cross section is greater than 2 and preferably greater than 3; in particular, according to a preferred embodiment, in each bar 9, the ratio between the long side 12 and the short side 13 of the rectangular cross section ranges from 3 to 3.7. This arrangement and this shape of the bars 9 combined together lead to a significant reduction in power losses due to skin effect inside the bars 9, thus increasing energy efficiency and also improving specific performances (power and/or torque).

According to a preferred embodiment shown in figures 2 and 3, each bar 9 is bent around the short side 13 of the rectangular cross section, namely each bar 9 is bent "*on edge".* In other words, each bar 9 is bent relative to the short side 13 (along the short side 13) of the rectangular cross section.

According to the embodiment shown in figure 4, in each stator slot 7 there are the legs 10 of eight bars 9 lined up behind one another and a (non-indispensable) filling element 17, which has a given elastic deforming ability and fulfils the function of filling the space left inside the stator slot 7, thus compacting the legs 10 of the eight bars 9.

According to figure 4, each stator slot 7 completely lacks any insulating element interposed between the ferromagnetic material making up the laminations of the magnetic core 6 and the corresponding bars 9, so that an outer surface 18 of the corresponding bars 9 is in direct contact with an inner surface 19 of the stator slot 7 made of the ferromagnetic material of the stator slot 7. This solution necessarily leads to an increase in the thickness of the insulating coating 14 of each bar 9, but, on the whole, it increases the coefficient of filling of the stator slots 7 (namely, the ratio between the area of the total cross section of the copper present in each stator slot 7 and the area of the cross section of the stator slot 7 itself), thus increasing specific performances (power and/or torque).

According to figure 5, the insulating coating 14 covering each bar 9 on the outside has a thickness exceeding 0.30 mm (for example equal to 0.35-0.40 mm). Furthermore, according to a possible, though non-limiting embodiment, the insulating coating 14 covering each bar 9 on the outside has an inner layer 20, which is in direct contact with the copper and has a thickness of approximately 0.20-0.25 mm, and an outer layer 21, which is arranged on the inner layer 20, has a thickness of approximately 0.10-0.15 mm and is in direct contact with the ferromagnetic material making up the laminations of the magnetic core 6. The inner layer 20 is made of a first material (an enamel or a resin) and the outer layer 21 is made of a second material (an enamel or a resin), which is different from the first material. In particular, the second material is mechanically more resistant and electrically less insulating than the first material; namely, the inner layer 20 basically has the function of ensuring an electric insulation, whereas the outer layer 21 basically has the function of mechanically protecting the inner layer 20 against the friction with the inner surface 19 of the stator slot 7 when the leg 10 of the bar 9 is inserted into the stator slot 7.

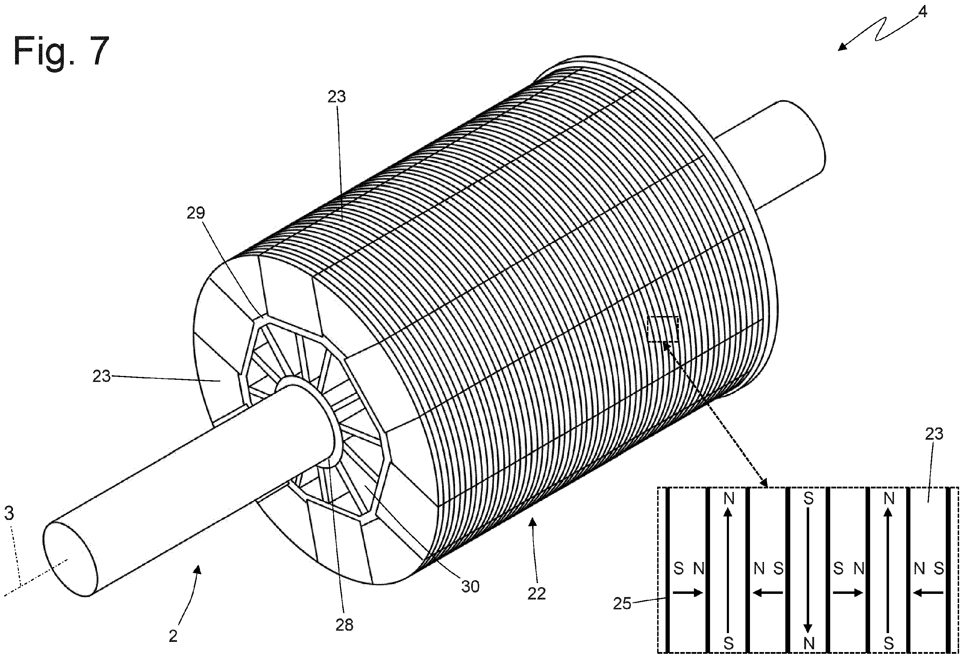

According to figure 7, the rotor 4 comprises a plurality of columns 22 of permanent magnets, which are oriented axially and are arranged beside one another around the rotations axis 3 so as to form a closed ring. In the embodiment shown in figure 7 there are twelve columns 22 of permanent magnets arranged so as to form a closed ring, but, according to other embodiments which are not shown herein, the total number of permanent magnet columns 22 could be different; for example, there could be eight to twenty-four columns 22 of permanent magnets.

Each permanent magnet column 22 consists of a succession of permanent magnets 23 lined up one behind the other, namely each permanent magnet column 22 consists of a plurality of permanent magnets 23, which are axially arranged one after the other; in particular, in each permanent magnet column 22 there generally are twenty to sixty permanent magnets 23 lined up one behind the other.

Each permanent magnet column 22 consists of a plurality of permanent magnets 23, which are axially arranged one after the other according to a Halbach array so as to nullify the magnetic field radially on the inside of the permanent magnets 23 and to maximize the magnetic field radially on the outside of the permanent magnets 23. In other words, the permanent magnets 23 in each column 22 of permanent magnets are arranged so as to nullify the magnetic field radially on the inside of the permanent magnets 23 (towards the shaft 2) and to maximize the magnetic field radially on the outside of the permanent magnets 23 (towards the magnetic core 6 of the stator 5) .

A Halbach array is a special arrangement of the permanent magnets 23 that augments the magnetic field on one side of the array (the radially outer side, in this embodiment) while cancelling (nullifying), through interference, the magnetic field on the opposite side (the radially inner side, in this embodiment). According to figure 7, the Halbach array entails cyclically repeating sets of four permanent magnets 23: a permanent magnet 23 having a South-North orientation arranged axially towards the right, a following permanent magnet 23 having a South-North orientation arranged radially towards the outside (namely, moving away from the central rotation axis 3), a following permanent magnet 23 having a South-North orientation arranged axially towards the left, and a following permanent magnet 23 having a South-North orientation arranged radially towards the inside (namely, moving close to the central rotation axis 3).

In the embodiment shown in the accompanying figures, the permanent magnet columns 22 alternatively have a rectangular cross section and an isosceles trapezium rectangular cross section; according to a different embodiment which is not shown herein, the permanent magnet columns 22 all have the same isosceles trapezium rectangular cross section.

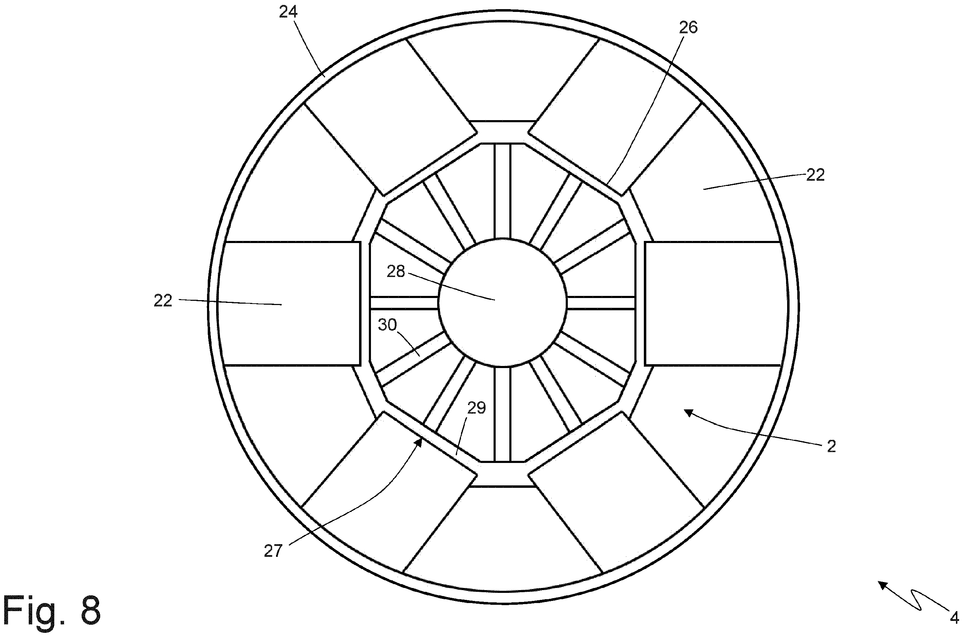

According to figure 8, the rotor 4 is completely free from ferromagnetic material arranged on the outside of the permanent magnets 23 (externally to the permanent magnets 23), namely the rotor 4 lacks both ferromagnetic material arranged radially on the outside of the permanent magnets 23 (i.e. between the permanent magnets 23 and the magnetic core 6 of the stator 5) and ferromagnetic material arranged radially on the inside of the permanent magnets 23 (i.e. between the permanent magnets 23 and the shaft 2).

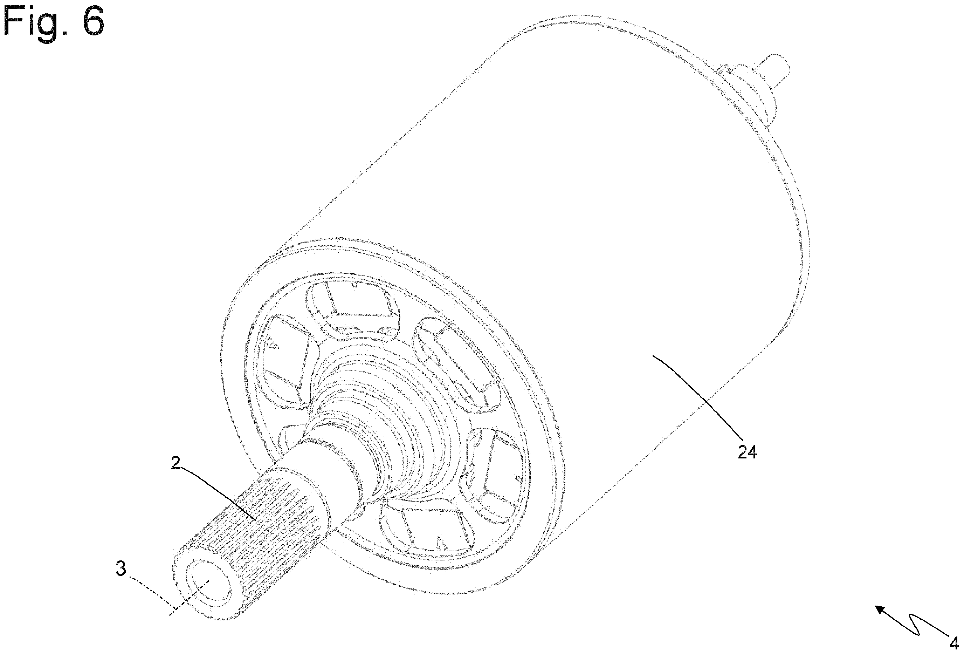

According to figures 6 and 8, the rotor 4 comprises a containing element 24 (not shown in figure 7), which is arranged around the permanent magnet columns 22 so as to always keep the permanent magnet columns 22 in contact with the shaft 2; namely, the containing element 24 covers the permanent magnet columns 22 on the outside so as to radially contain the permanent magnets columns 22 in order to prevent a centrifugal force from pushing them against the magnetic core 6 of the stator 5. According to a possible embodiment, the containing element 24 consists of a resin-bonded filament wound in a spiral around the columns 22 of permanent magnets; according to an alternative embodiment, the containing element 24 consists of a tubular element made of a composite material, of a light non-ferromagnetic metal material (for example, aluminium) or of a ferromagnetic metal material.

According to a preferred embodiment shown in figure 7, in each permanent magnet column 22, the single permanent magnets 23 are glued to one another through the interposition of a glue 25, which preferably is an electric insulator, so as to reduce power losses due to parasite currents. In other words, each permanent magnet column 22 is obtained by gluing the single permanent magnets 23 to one another by means of the glue 25, which preferably is an electric insulator.

According to a preferred embodiment shown in figures 7 and 8, the permanent magnet columns 22 are directly mounted on an outer wall of the shaft 2; in particular, each permanent magnet columns 22 is glued to the outer wall of the shaft 2 by means of a glue 26 (shown in figure 8), which preferably is an electric insulator (in order to avoid short-circuits between the different permanent magnets 23 of a same permanent magnet column 22 through the outer wall of the shaft 2). In other words, between the outer wall of the shaft 2 and the permanent magnet columns 22 there is interposed an electrically insulating layer built by the glue 26. According to a different embodiment, the glue 26 could not be an electric insulator, namely the glue 26 does not necessarily has to be an electric insulator.

The glue 26 has the function of electrically insulating the permanent magnet columns 22 from the outer wall of the shaft 2 underneath and also has the function of connecting the permanent magnet columns 22 to the outer wall of the shaft 2 while building the rotor 4 (the mechanical holding of the permanent magnet columns 22 is ensured by the containing element 24, since the glue 26 is not capable of resisting a centrifugal force when the rotor 4 rotates at a high speed).

According to a preferred embodiment shown in figures 7 and 8, the outer wall of the shaft 2 has a plurality of seats 27, each designed to accommodate a corresponding column 22 of permanent magnets; namely, each seat 27 is shaped so as to reproduce in negative the shape of the corresponding permanent magnet column 22 in order to accommodate and house, with a minimum clearance, the permanent magnet column 22 itself.

According to figure 8, the shaft 2 has a hub 28 supported by bearings (not shown), a rim 29, which is arranged around the hub 28 at a given distance from the hub 28 and supports the columns 22 of permanent magnets (namely, makes up the outer wall of the shaft 2), and a plurality of spokes 30, which develop radially and connect the hub 28 to the rim 29 so that between the hub 28 and the rim 29 there is an empty space.

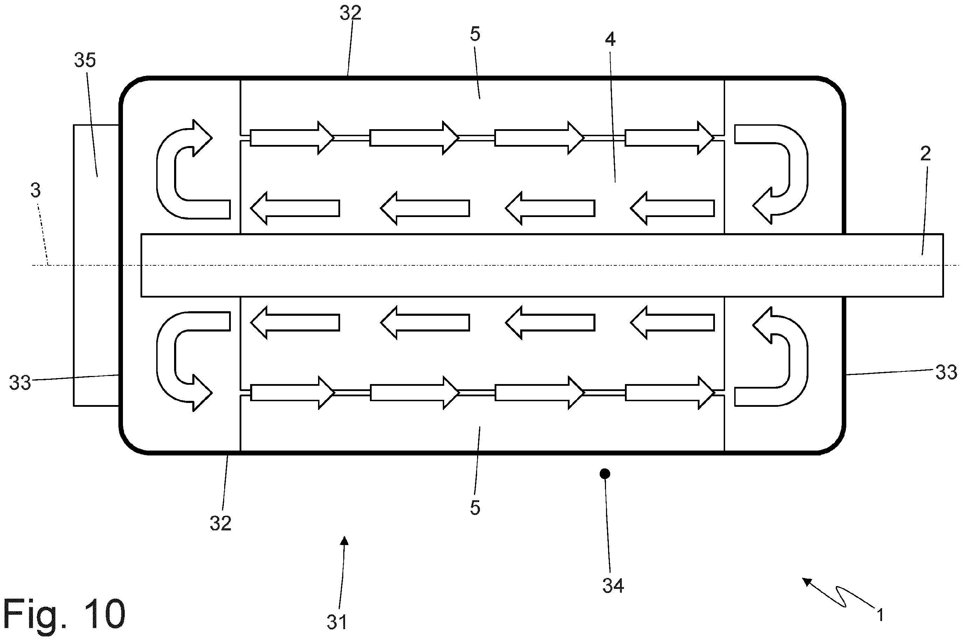

According to figure 1, the electric machine 1 comprises a casing 31, which houses, on the inside, the stator 5 and has a cylindrical central body 32, which is arranged around the magnetic core 6 of the stator 5, and two cup-shaped caps 33 (which, though, could even be flat), which close the central body 32 on the opposite sides thereof. Between an outer surface 18 of the magnetic core 6 of the stator 5 and an inner surface 19 of the central body 32 of the casing 31 there is obtained an annular hollow space 34, which is designed to allow an air flow to circulate. In the embodiment shown in figure 1, each cap 33 is coupled to a heat exchanger 35 operating with liquid (namely, having a cooling circuit circulating on the inside) or with air (namely, hit by a fresh air flow); according to different embodiments, one single heat exchanger 35 is provided, which is coupled to one single cap 33 (according to figure 10), or no heat exchanger 35 is provided (this variant not being shown).

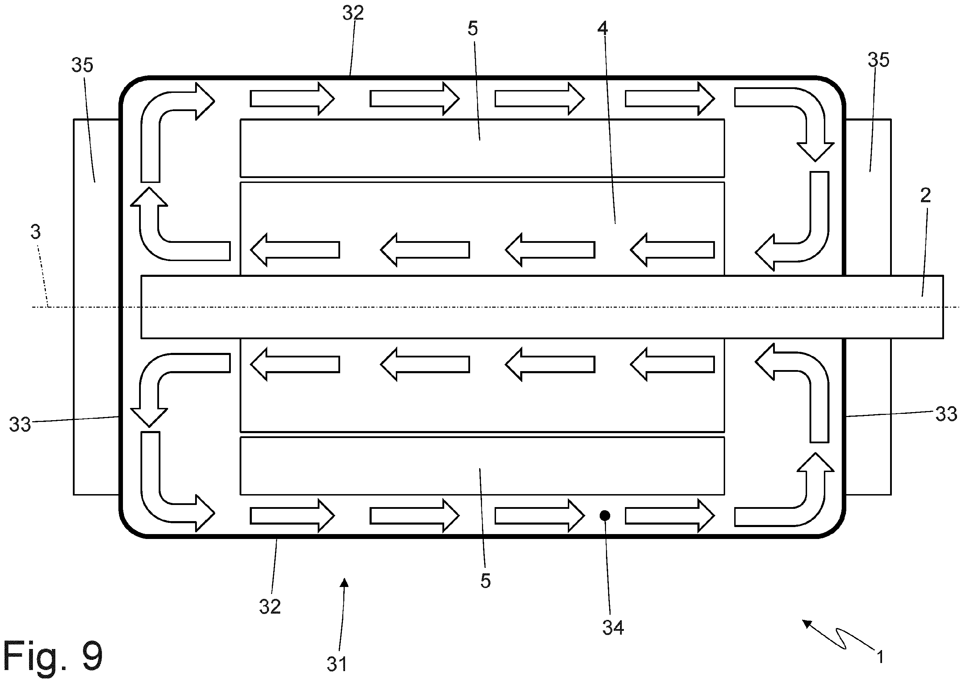

According to figure 9, the spokes 30 of the shaft 2 are shaped (for example in a helical manner) so as to cause the air present inside the shaft 2 to have an axially oriented component of motion; in this way, when the shaft 2 is rotating, the air present inside the shaft 2 (namely, in the empty spaces between the spokes 30) receives an axial thrust, which generates an axially oriented air flow, which flows through the shaft 2; the air flow flowing out of the shaft 2, by hitting a cap 33 (arranged on the left in figure 9), is deflected outwards until it flows into the annular hollow space 34, through which it flows with an opposite direction compared to the motion direction imparted by the spokes 30 of the shaft 2. In this way, when the shaft 2 is rotating, inside the casing 31 there is a continuous air flow circulating in a direction on the inside of the shaft 2 and in an opposite direction on the outside of the stator 5; this air flow removes heat from the inside of the shaft 2 and leads it towards the casing 31 (i.e. towards the outside), namely both towards the caps 33 (which can be coupled to heat exchangers 35 integrated in the caps 33 to a smaller or greater extent) and towards the central body 32 (which can also be coupled to a heat exchanger integrated in the central body 32 to a smaller or greater extent).

In the variant shown in figure 10, there is no annular hollow space 34 and, therefore, the air flow flowing out of the shaft 2, by hitting a cap 33 (arranged on the left in figure 10) is deflected towards the air gap existing between the rotor 4 and the stator 5 until it flows into the air gap, through which is flows in an opposite direction compared to the motion direction imparted by the spokes 30 of the shaft 2. In this way, when the shaft 2 is rotating, inside the casing 31 there is a continuous air flow circulating in a direction on the inside of the shaft 2 and in an opposite direction on the inside of the air gap; this air flow removes heat from the inside of the shaft 2 and, from outside the rotor 4, leads it towards the caps 33 of the casing 31 (i.e. towards the outside). Obviously, even in the embodiment shown in figure 9, a small part of the air flow flows through the air gap instead of the hollow space 34; however, the largest part of the air flow flows through the hollow space 34, which has a cross section that is much larger than a cross section of the air gap.

Thanks to the presence of the continuous air flow on the inside of the shaft 2, the shaft 2 and, hence, the entire rotor 4 can efficiently be cooled down without having to use a liquid cooling of the rotor 4, which is particularly complicated (since the cooling liquid continuously has to flow from a fixed part to a rotary part).

According to a possible embodiment, on the inside of the two caps 33 there are arranged a plurality of fins, which are shaped so as to guide an air flow from the centre towards the periphery and vice versa, namely, on the one hand, so as to guide the air flow coming from the shaft 2 towards the annular hollow space 34 and, on the other hand, so as to guide the air flow coming from the annular hollow space 34 towards the shaft 2.

According to a preferred, though non-limiting embodiment, the spokes 30 are also shaped so as to generate, during the rotation of the shaft 2, a predetermined sound; namely, the shape of the spokes 30 is designed so as to obtain, during the rotation of the shaft 2, the generation of a desired sound.

The embodiments described herein can be combined with one another, without for this reason going beyond the scope of protection of the invention as defined in the appended claims.

The electric machine 1 described above has numerous advantages.

First of all, the electric machine 1 described above has a high energy efficiency (namely, a high efficiency between the input mechanical or electrical power and the output mechanical or electrical power).

Furthermore, the electric machine 1 described above ensures high specific performances (power and/or torque), namely high performances (power and/or torque) per mass and/or volume unit.

Finally, the electric machine 1 described above is easy and economic to be manufactured, since it does not require manufacturing costs that are substantially higher compared to a traditional electric machine with equivalent performances.

### LIST OF THE REFERENCE NUMBERS OF THE FIGURES

- 1: electric machine
- 2: shaft
- 3: rotation axis
- 4: rotor
- 5: stator
- 6: magnetic core
- 7: stator slots
- 8: stator winding
- 9: bars
- 10: legs
- 11: cusp
- 12: long side
- 13: short side
- 14: insulating coating
- 15: long side
- 16: short side
- 17: filling element
- 18: outer surface
- 19: inner surface
- 20: inner layer
- 21: outer layer
- 22: permanent magnet columns
- 23: permanent magnets
- 24: containing element
- 25: glue
- 26: glue
- 27: seats
- 28: hub
- 29: rim
- 30: spokes
- 31: casing
- 32: central body
- 33: caps
- 34: annular hollow space
- 35: heat exchanger

## Claims

1. An electric machine (1) comprising:
a shaft (2), which is mounted so as to rotate around a central rotation axis (3);
a rotor (4), which is fitted to the shaft (2) so as to rotate together with the shaft (2);
a stator (5) with a tubular, cylindrical shape, which is arranged around the rotor (4) so as to enclose, on the inside, the rotor (4) and has a magnetic core (6), which consists of a series of laminations made of a ferromagnetic material and is longitudinally crossed by a plurality of stator slots (7); and
a stator winding (8) comprising a plurality of rigid bars (9), which are inserted in corresponding stator slots (7) and are covered, on the outside, with an insulating coating (14);
wherein each stator slot (7) has a rectangular cross section having a long side (12) arranged radially and a short side (13) arranged circumferentially;
wherein each stator slot (7) houses eight bars (9) lined up one behind the other; and
wherein each bar (9) has a rectangular cross section having a long side (12) parallel to the short side (13) of the corresponding stator slot (7) and a short side (13) parallel to the long side (15) of the corresponding stator slot (7);
the electric machine (1) is **characterized in that:**
the rotor (4) comprises permanent magnets (23); and
in each bar (9), the ratio between the long side (12) and the short side (13) of the rectangular cross section ranges from 3 to 3.7.

2. The electric machine (1) according to claim 1, wherein each bar (9) has a straight central portion, which is inserted in a corresponding stator slot (7), and two end portions, which are bent relative to the central portion around the short side (13) of the rectangular cross section.

## Patentansprüche

1. Elektrische Maschine (1) aufweisend:
eine Welle (2), die so montiert ist, dass sie sich um eine zentrale Rotationsachse (3) dreht;
einen Rotor (4), der so an der Welle (2) angebracht ist, dass er sich zusammen mit der Welle (2) dreht;
einen röhrenförmigen zylindrischen Stator (5), der so um den Rotor (4) herum angeordnet ist, dass er den Rotor (4) im Innern einschließt, und einen Magnetkern (6) hat, der aus einer Vielzahl von Schichten aus ferromagnetischem Material gebildet ist und in Längsrichtung von mehreren Statorschlitzen (7) durchzogen ist; und
eine Statorwicklung (8) mit mehreren starren Stäben (9), die in entsprechenden Statorschlitzen (7) eingesetzt sind und an der Außenseite mit einer isolierenden Beschichtung (14) bedeckt sind;
wobei jeder Statorschlitz (7) einen rechtwinkligen Querschnitt mit einer radial angeordneten langen Seite (12) und einer in Umfangsrichtung angeordneten kurzen Seite (13) hat;
wobei jeder Statorschlitz (7) acht hintereinander aufgereihte Stäbe (9) aufnimmt; und
wobei jeder Stab (9) einen rechtwinkligen Querschnitt hat, mit einer langen Seite (12) parallel zur kurzen Seite (13) des entsprechenden Statorschlitzes (7) und einer kurzen Seite (13) parallel zur langen Seite (15) des entsprechenden Statorschlitzes (7);
wobei die elektrische Maschine (1) **dadurch gekennzeichnet ist, dass** der Rotor (4) Permanentmagnete (23) aufweist; und
in jedem Stab (9) das Verhältnis zwischen der langen Seite (12) und der kurzen Seite (13) des rechtwinkligen Querschnitts in einem Bereich von 3 bis 3,7 ist.

2. Elektrische Maschine (1) nach Anspruch 1, wobei jeder Stab (9) aufweist: einen geraden zentralen Abschnitt, der in einem entsprechenden Statorschlitz (7) eingesetzt ist, und zwei Endabschnitte, die relativ zu dem zentralen Abschnitt um die kurze Seite (13) des rechtwinkligen Querschnitts gebogen sind.

## Revendications

1. Machine électrique (1) comprenant :
un arbre (2) qui est monté de façon à tourner autour d'un axe de rotation central (3) ;
un rotor (4), qui est fixé à l'arbre (2) de façon à tourner avec l'arbre (2) ;
un stator (5) présentant une forme tubulaire et cylindrique qui est agencé autour du rotor (4) de façon à entourer, à l'intérieur, le rotor (4) et a un noyau magnétique (6), qui est constitué d'une série de stratifications fabriquées à partir d'un matériau ferromagnétique et est traversé longitudinalement par une pluralité d'encoches de stator (7) ; et
un enroulement statorique (8) comprenant une pluralité de barres rigides (9), qui sont insérées dans des encoches de stator (7) correspondantes et sont recouvertes, à l'extérieur, d'un revêtement isolant (14) ;
dans lequel chaque encoche de stator (7) a une section transversale rectangulaire ayant un côté long (12) agencé radialement et un côté court (13) agencé circonférentiellement ;
dans lequel chaque encoche de stator (7) loge huit barres (9) alignées les unes derrière les autres ; et
dans lequel chaque barre (9) a une section transversale rectangulaire ayant un côté long (12) parallèle au côté court (13) de l'encoche de stator (7) correspondante et un côté court (13) parallèle au côté long (15) de l'encoche de stator (7) correspondante ;
la machine électrique (1) est **caractérisée en ce que** :
le rotor (4) comprend des aimants permanents (23) ; et
dans chaque barre (9), le rapport entre le côté long (12) et le côté court (13) de la section transversale rectangulaire varie de 3 à 3,7.

2. Machine électrique (1) selon la revendication 1, dans laquelle chaque barre (9) a une partie centrale droite, qui est insérée dans une encoche de stator (7) correspondante, et deux parties d'extrémité, qui sont pliées par rapport à la partie centrale autour du côté court (13) de la section transversale rectangulaire.
